# EUROPÄISCHE PATENTANMELDUNG

(11) **EP 2 800 254 A1**
(43) Veröffentlichungstag der Anmeldung: **05.11.2014**
(21) Anmeldenummer: 13165691.0
(22) Anmeldetag: 29.04.2013
(51) Int. Cl.: H02K 15/00

(54) **Rotor einer elektrischen Maschine mit einem ausgehend von Granulat hergestellten Kurzschlusskäfig**

(71) Anmelder: Siemens Aktiengesellschaft, 80333 München (DE)
(72) Erfinder: Bethge, Andreas, 13587 Berlin (DE)

(57) **Zusammenfassung**

Zusammenfassend betrifft die Erfindung ein Verfahren zur Herstellung eines Rotors einer elektrischen Maschine, wobei der Rotor einen konzentrisch zur Rotorachse angeordneten Rotorkern (1) aus einem Kernmaterial aufweist, wobei der Rotorkern (1) Nuten (2) aufweist, welche im Wesentlichen in axialer Richtung verlaufen, wobei der Rotorkern (1) am jeweiligen axialen Ende der Nuten (2) jeweils eine ringförmige, konzentrisch zur Rotorachse angeordnete Aussparung (3) aufweist, welche die Nuten (2) verbindet, wobei der Rotorkern (1) eine Diffusionsschicht (4) aufweist, welche ein Diffusionsmaterial umfasst und welche zumindest die jeweilige Oberfläche der Nuten (2) und/oder der jeweiligen ringförmigen Aussparung (3) zumindest teilweise bedeckt. Weiterhin betrifft die Erfindung einen solchen Rotor und eine elektrische Maschine mit einem solchen Rotor. Um das eingangs genannte Verfahren bzw. den eingangs genannten Rotor dahingehend zu verbessern, dass der Rotor kostengünstiger hergestellt werden kann und dabei verbesserte mechanische Eigenschaften aufweist, wird vorgeschlagen, dass in die Nuten (2) und/oder die jeweilige ringförmige Aussparung (3) ein Granulat (5) eines elektrisch leitenden Materials eingebracht wird, welches unter Zuführung von Hitze und unter Ausübung von Druck materialschlüssig mit dem Rotorkern (1) verbunden wird.

## Beschreibung

Die Erfindung betrifft ein Verfahren zur Herstellung eines Rotors einer elektrischen Maschine, wobei der Rotor einen konzentrisch zur Rotorachse angeordneten Rotorkern aus einem Kernmaterial aufweist, wobei der Rotorkern Nuten aufweist, welche im Wesentlichen in axialer Richtung verlaufen, wobei der Rotorkern am jeweiligen axialen Ende der Nuten jeweils eine ringförmige, konzentrisch zur Rotorachse angeordnete Aussparung aufweist, welche die Nuten verbindet, wobei der Rotorkern eine Diffusionsschicht aufweist, welche ein Diffusionsmaterial umfasst und welche zumindest die jeweilige Oberfläche der Nuten und/oder der jeweiligen ringförmigen Aussparung zumindest teilweise bedeckt.

Weiterhin betrifft die Erfindung einen Rotor für eine elektrische Maschine wobei der Rotor einen konzentrisch zur Rotorachse angeordneten Rotorkern aus einem Kernmaterial aufweist, wobei der Rotorkern Nuten aufweist, welche im Wesentlichen in axialer Richtung verlaufen, wobei der Rotorkern am jeweiligen axialen Ende der Nuten jeweils eine ringförmige, konzentrisch zur Rotorachse angeordnete Aussparung aufweist, welche die Nuten verbindet, wobei der Rotorkern eine Diffusionsschicht aufweist, welche ein Diffusionsmaterial umfasst und welche zumindest die jeweilige Oberfläche der Nuten und/oder der jeweiligen ringförmigen Aussparung zumindest teilweise bedeckt.

Schließlich betrifft die Erfindung auch eine elektrische Maschine mit einem erfindungsgemäßen Rotor.

Derartige Rotoren sind beispielsweise als Asynchronmassivläufer bekannt, welche für Drehzahlen größer als 4000 U/min und Leistungen größer als 1 MW geeignet sind. Solche Asynchronmassivläufer müssen aufgrund z.B. der Fliehkraftbelastung und aufgrund ihres Verhaltens bei einer Erwärmung und bei Schwingungen hohen mechanischen Anforderungen genügen.

Bisher wird unter Verwendung von zuvor einzeln hergestellten Kupferteilen, welche anschließend noch vernickelt werden und zu einem Kurzschlusskäfig zusammengesetzt werden, der Rohkäfig in Einzelteilen in die Wellennuten eingelegt, vakuumdicht gekapselt und durch Diffusionsschweißen beim heißisostatischem Pressen (HIP) kraftschlüssig käfigintern und mit der Stahlwelle verbunden. Die Stab- und Kurzschlussringformen unterliegen dabei der Beschränkung, dass sie in radialer Richtung und in axialer Richtung in die gefrästen, bzw. gedrehten Wellennuten einlegbar sein müssen. Die Produktion sowohl der Teile des Kurzschlusskäfigs als auch der Stahlwelle erfolgt mit hohen Passgenauigkeitsanforderungen und vielen Prüfschritten.

Ein derartiges Verfahren und ein derartiger Rotor sind beispielsweise aus der WO 2005/124973 A1 bekannt, bei der ein Kurzschlusskäfig, bestehend aus Kurzschlussstäben und zwei Kurzschlussringen aus Kupfer, mittels heißisostatischem Pressen (HIP) an einer Kernwelle des Rotors befestigt werden. Dazu ist die Kernwelle oder das jeweilige Element des Kurzschlusskäfigs an der Stelle der Verbindung des Kurzschlusskäfigs mit der Kernwelle mit einer Diffusionsschicht versehen.

Der Erfindung liegt die Aufgabe zugrunde, das eingangs genannte Verfahren bzw. den eingangs genannten Rotor dahingehend zu verbessern, dass der Rotor kostengünstiger hergestellt werden kann und dabei verbesserte mechanische Eigenschaften aufweist.

Diese Aufgabe wird bei einem Verfahren der eingangs genannten Art dadurch gelöst, dass in die Nuten und/oder die jeweilige ringförmige Aussparung ein Granulat eines elektrisch leitenden Materials eingebracht wird, welches unter Zuführung von Hitze und unter Ausübung von Druck materialschlüssig mit dem Rotorkern verbunden wird.

Weiterhin wird diese Aufgabe bei einem Rotor der eingangs genannten Art dadurch gelöst, dass in den Nuten und/oder der jeweiligen ringförmigen Aussparung ein elektrisch leitendes Material eingebracht ist, welches als Granulat unter Zuführung von Hitze und unter Ausübung von Druck materialschlüssig mit dem Rotorkern verbunden ist.

Schließlich wird diese Aufgabe auch durch eine elektrische Maschine mit einem erfindungsgemäßen Rotor gelöst.

Dabei weist das Granulat eine Vielzahl kleiner, fester Partikel wie Körner oder Kugeln des elektrisch leitenden Materials auf und wird auch als Schüttgut bezeichnet.

Das Diffusionsmaterial der Diffusionsschicht kann insbesondere galvanisch aufgetragen werden. Vorzugsweise bedeckt das Diffusionsmaterial den Rotorkern zumindest in jenem Bereich, in welchem das elektrisch leitende Material des Kurzschlusskäfigs mit dem Rotorkern verbunden werden soll. Denkbar ist auch, dass der komplette Rotorkern mit der Diffusionsschicht überzogen wird. Das Auftragen des Diffusionsmaterials auf den Rotorkern, was technisch ohne großen Aufwand und ohne große Kosten machbar ist, ermöglicht dabei, ein technisch aufwändigeres Auftragen des Diffusionsmaterials auf den Kurzschlusskäfig einzusparen.

Während der Zuführung von Hitze und der Ausübung von Druck bewirkt die Diffusionsschicht eine Diffusion des Diffusionsmaterials zum einen in das Kernmaterial und zum anderen in das Granulat des elektrisch leitenden Materials, so dass eine stabile, materialschlüssige Verbindung zwischen dem Kernmaterial und dem elektrisch leitenden Material des aus dem Granulat gebildeten Kurzschlusskäfigs gewährleistet wird.

Die materialschlüssige Verbindung des in den Nuten und/oder der jeweiligen ringförmigen Aussparung angeordneten Granulats mit dem Rotorkern wird dabei beispielsweise durch heißisostatisches Pressen erreicht. Dazu kann beispielsweise eine Umhausung am Rotorkern angebracht wird, welche zumindest die Nuten und/oder die jeweilige ringförmige Aussparung des Rotorkerns gasdicht umschließen kann, wobei das Granulat zumindest in den Nuten und/oder die jeweilige ringförmige Aussparung eingebracht wird und anschließend die Umhausung gasdicht um den Rotorkern geschlossen wird und evakuiert wird. Die Umhausung kann beispielsweise ein Blechrohr sein, welches dem Rotor umschließt und konzentrisch zur Rotorachse angeordnet ist. Das Blechrohr ist dabei lediglich eine Hilfsvorrichtung, welche nach dem HIP-Prozess beim Überdrehen des Rotors entfernt wird. d.h. beim Entfernen der Grate des Rotors und dergleichen mittels Drehen. Vorzugsweise wird in die Umhausung ein Überschuss des Granulats des elektrisch leitenden Materials eingebracht.

Gegenüber Herstellungsverfahren, bei denen die Teile des Kurzschlusskäfigs vorab hergestellt werden und anschließend am Rotor befestigt werden, erlaubt das erfindungsgemäße Verfahren die komplette Einsparung einer kosten- und zeitintensiven Vorab-Fertigung der Teile des Kurzschlusskäfigs. Kosten lassen sich dadurch einsparen, dass keine Teile des Kurzschlusskäfigs, insbesondere keine Kupferformteile, mehr benötigt werden, die mit einer besonders hohen Passgenauigkeit hergestellt werden müssen und somit mit vergleichsweise geringen Toleranzen gefertigt werden müssen und folglich vergleichsweise teuer sind. Auch die großen logistischen Anforderungen bezüglich der Beschaffung der speziell angepassten Teile können komplett entfallen. Hinzu kommt, dass das Granulat vergleichsweise kostengünstig erhältlich ist und in großen Mengen gelagert und transportiert werden kann. Weiterhin gibt es bei dem erfindungsgemäßen Verfahren nunmehr keine Einschränkungen bzgl. der Geometrie der Käfig-Einzelteile, wie zum Beispiel die Stabform und die Form des Kurzschlussrings.

Vielmehr kann durch das erfindungsgemäße Verfahren ein Rotor hergestellt werden, der aufgrund der ausgesprochen guten Verbindung des in den Nuten und der jeweiligen ringförmigen Aussparung befindlichen elektrisch leitenden Materials mit dem Kernmaterial eine hohe mechanische Festigkeit aufweist. Weiterhin weist der erfindungsgemäße Rotor einen sehr guten elektrischen Wirkungsgrad auf, da der Kurzschlusskäfig aus materialschlüssig verbundenem elektrisch leitendem Material gebildet wird und nicht wie bisher aus separaten Kurzschlussstäben und Kurzschlussringen, deren Verbindung untereinander bisher höhere elektrische Verluste bewirkt hat. Somit sind erfindungsgemäß auch Nutformen umsetzbar, die elektrische und/oder mechanische Optimierungen ermöglichen.

Der erfindungsgemäße Rotor ist besonders für hohe Drehzahlen geeignet, da das erfindungsgemäße Verfahren eine besonders starke Verbindung des ausgehend von dem Granulat hergestellten Kurzschlusskäfigs mit dem Rotorkern bewirkt und der Rotor auch beim Auftreten sehr hoher Fliehkräfte seine mechanische Stabilität und Integrität bewahrt.

Optional kann der Rotor mit der Rotorwelle und dem mit der Rotorwelle materialschlüssig verbundenen elektrisch leitenden Material des Kurzschlusskäfigs zumindest teilweise mit einer Schutzschicht überzogen werden, wobei die Schutzschicht beispielsweise mittels Auftragsschweißen auf die Rotorwelle aufgebracht wird. Für die Schutzschicht können beispielsweise korrosionsbeständige Nickelbasislegierungen zum Einsatz kommen, wie z. B. Inconel. Die Schutzschicht ist besonders bei Rotoren von Vorteil, die in aggressiven Umgebungsbedingungen betrieben werden. Derartige Bedingungen liegen beispielsweise bei einem Antriebsmotor eines Kompressors vor, der Schwefelwasserstoff haltiges Erdgas komprimiert und dieses Gas gleichzeitig zur Kühlung des Antriebsmotors verwendet.

Die Nuten können entlang der axialen Richtung im Rotorkern angeordnet sein und somit koaxial mit der Rotorachse ausgerichtet sein. Denkbar ist auch, dass die Nuten entlang einer Schraubenbahn um die Rotorachse herum angeordnet sind, so dass die Position die jeweiligen Nut in Umfangsrichtung in axialer Richtung variiert.

Vorzugsweise wird das Granulat sowohl in die Nuten als auch in die jeweilige ringförmige Aussparung eingebracht, wobei die Diffusionsschicht die Nuten und die jeweilige ringförmige Aussparung zumindest teilweise bedeckt.

Bei einer vorteilhaften Ausgestaltung der Erfindung umfasst das elektrisch leitende Material zumindest Kupfer, wobei das Diffusionsmaterial zumindest Nickel umfasst. Kupfer weist eine gute elektrische Leitfähigkeit auf und ist dabei kostengünstig erhältlich, insbesondere in Form eines Granulats. Nickel ist ein Material, welches gut in das Kupfer-Granulat hinein diffundieren kann. Weiterhin ist Nickel vorteilhaft, da für das Kernmaterial üblicherweise Stahl verwendet wird und Nickel weiterhin die Eigenschaft hat, dass es auch gut in Stahl diffundieren kann. Somit wird eine besonders stabile materialschlüssige Verbindung des Kupfers des Kurzschlusskäfigs mit dem Rotorkern erreicht.

Bei einer weiteren vorteilhaften Ausgestaltung der Erfindung wird das Granulat zur materialschlüssigen Verbindung mit dem Rotorkern dabei auf eine Temperatur von 1010 °C bis 1060 °C, insbesondere von 1030 °C bis 1040 °C, erhitzt und unter einen Druck von 950 bar bis 1050 bar, insbesondere 1000 bar, gesetzt. Eine belastbare Verbindung des Granulats mit dem Rotorkern kann erreicht werden, wenn das Granulat und gegebenenfalls jene Oberflächen des Rotorkerns, mit welchen das Granulat verbunden werden soll, auf eine Temperatur im genannten Temperaturbereich erhitzt wird und gleichzeitig ein Druck im Bereich des genannten Druckbereichs ausgeübt wird. Dabei lassen sich die besten Ergebnisse erzielen, wenn die Temperatur im Bereich von 1030 °C bis 1040 °C liegt und der Druck etwa 1000 bar beträgt. Gute Ergebnisse lassen sich erzielen, wenn die die Temperatur knapp, insbesondere 3-5%, unterhalb der Schmelztemperatur des elektrisch leitenden Materials liegt und dabei vergleichsweise hoher Druck, insbesondere über 800 bar, ausgeübt wird.

Bei einer weiteren vorteilhaften Ausgestaltung der Erfindung wird das in den Nuten und der jeweiligen ringförmigen Aussparung angeordnete Granulat unter Vakuum gehalten, während Hitze zugeführt wird und Druck ausgeübt wird. Durch das Vakuum wird eine Oxidation des elektrisch leitenden Materials verhindert, wobei zum gleichen Zweck bzw. zusätzlich ein Prozessgas in Form eines Schutzgas ist bzw. Prozessgases verwendet werden kann. Ein derartiges Gas kann zum Beispiel Argon oder Stickstoff umfassen.

Bei einer weiteren vorteilhaften Ausgestaltung der Erfindung weist die Diffusionsschicht eine Schichtdicke von 1 µm bis 100 µm, insbesondere von 15 µm bis 40 µm, auf. Eine derartige Schichtdicke gewährleistet eine ausreichende Menge Diffusionsmaterial, um eine gute materialschlüssige Verbindung des Rotorkerns mit dem aus dem Granulat hergestellten Kurzschlusskäfig. Beispielsweise kann die Diffusionsschicht dabei galvanisch auf den Rotorkern bzw. auf zumindest jene Abschnitte des Rotorkerns aufgetragen werden, welche mit dem Kurzschlusskäfig verbunden werden sollen.

Bei einer weiteren vorteilhaften Ausgestaltung der Erfindung sind die Nuten im Rotorkern geschlossen ausgeführt. Die geschlossenen Nuten sind somit als Kanäle im Inneren des Rotorkerns ausgeführt. Durch das erfindungsgemäße können auch derartige geschlossene Nuten mit Kurzschlussstäben versehen werden, welche erfindungsgemäß durch das Granulat gebildet werden und materialschlüssig mit dem Rotorkern verbunden sind.

Unabhängig davon, ob die Nuten geschlossen, d.h. im Inneren des Rotorkerns, oder offen, d.h. auf der Mantelfläche Rotorkerns, ausgeführt sind, können die Nuten dabei einen im Wesentlichen rechteckigen, trapezförmigen, dreieckigen, runden oder sonstigen Querschnitt aufweisen. Denn durch das erfindungsgemäße Verfahren wird unabhängig von der Form der Nuten immer eine gute, materialschlüssige Verbindung des aus dem Granulat gebildeten Kurzschlusskäfigs mit dem Rotorkern gewährleistet. Ferner kann die jeweilige ringförmige Aussparung ebenfalls beliebige Querschnitte aufweisen, beispielsweise einen im Wesentlichen rechteckigen, trapezförmigen, dreieckigen, runden Querschnitt. Denkbar ist auch die jeweilige ringförmige Aussparung konusförmig auszugestalten.

Insgesamt ermöglicht das erfindungsgemäße Verfahren somit, die elektrischen und/oder die mechanischen Eigenschaften des Rotors zu optimieren, indem die Form des Kurzschlusskäfigs derart gewählt wird, dass besonders vorteilhafte oder gewünschte Eigenschaften erreicht werden können. Die gewünschte Form des Kurzschlusskäfigs kann dann durch entsprechende Ausgestaltung der Nuten und/oder der jeweiligen ringförmigen Aussparung erreicht werden. Wenn sich die Nuten und die jeweilige ringförmige Aussparung beispielsweise nach radial außen verjüngen, oder insbesondere die Nuten geschlossen ausgeführt sind, ergibt sich somit ein besonders stabiler Rotor, welcher für besonders hohe Drehzahlen geeignete ist.

Der erfindungsgemäße Rotor kann beispielsweise als Asynchronmassivläufer ausgeführt werden und/oder in einer elektrischen Maschine eingesetzt werden. Dabei kann die elektrische Maschine beispielsweise mit einer Leistung von mehr als 1 MW und/oder einer Drehzahl von mehr als 4000 Umdrehungen pro Minute betreibbar sein. Insbesondere kann die elektrische Maschine als Antrieb für eine Mühle oder einen Kompressor ausgeführt sein.

Im Folgenden wird die Erfindung anhand der in den Figuren dargestellten Ausführungsbeispiele näher beschrieben und erläutert. Es zeigen:
- FIG 1: einen Rotorkern zur Herstellung eines Ausführungsbeispiels eines erfindungsgemäßen Rotors, und
- FIG 2: ein Ausführungsbeispiel eines erfindungsgemäßen Rotors.

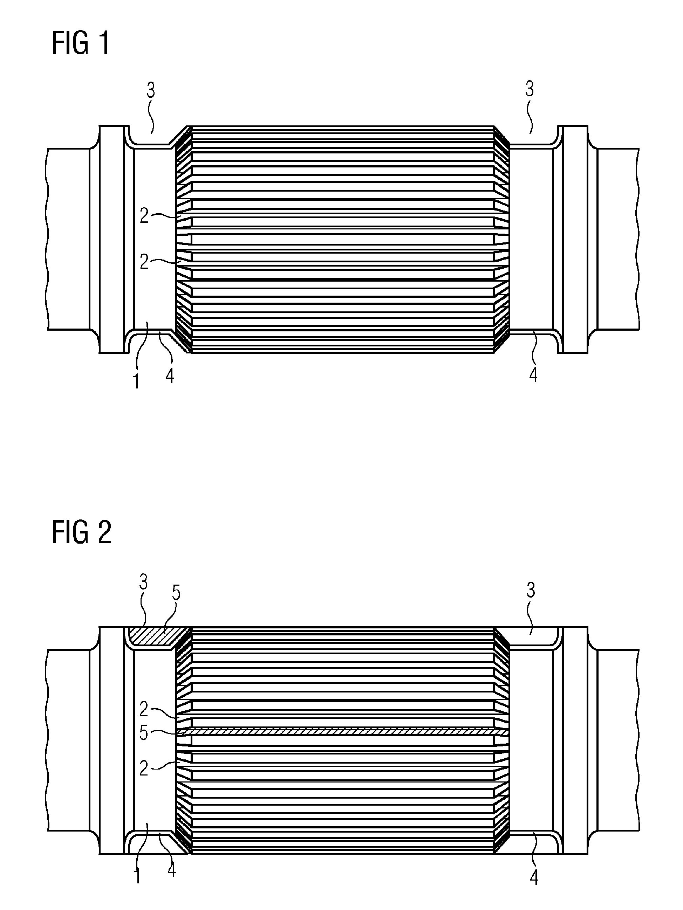

Figur 1 zeigt einen Rotorkern 1 zur Herstellung eines Ausführungsbeispiels eines erfindungsgemäßen Rotors. In den Rotorkern 1 sind Nuten 2 eingebracht, welche im Wesentlichen in axialer Richtung verlaufen. Wie im vorliegenden Ausführungsbeispiel können die Nuten 2 offen ausgeführt sein und einen im Wesentlichen rechteckigen Querschnitt aufweisen. Am jeweiligen axialen Ende der Nuten 2 weist der Rotorkern 1 eine ringförmige, konzentrisch zur Rotorachse angeordnete Aussparung 3 auf.

Denkbar ist dabei, dass die Nuten 2 einen alternativen Querschnitt aufweisen, wie zum Beispiel die Form eines Dreiecks, eines sich nach außen oder nach innen verjüngenden Trapezes, eines Kreises oder dergleichen. Ferner können die Nuten 2 auch geschlossen mit einem derartigen Querschnitt ausgeführt sein, so dass Nuten 2 zwischen den jeweiligen ringförmigen Aussparungen 3 im Innern des Rotorkerns 1 verlaufen. Die Nuten 2 können außerdem genau in axialer Richtung verlaufen oder entlang einer Schraubenbahn um die Rotorachse herum angeordnet sind, so dass die Position die jeweilige Nut 2 in Umfangsrichtung in axialer Richtung variiert. Schließlich kann die jeweilige ringförmige Aussparung 3 ebenfalls beliebige Querschnitte aufweisen, beispielsweise einen im Wesentlichen rechteckigen, trapezförmigen, dreieckigen, runden Querschnitt. Auch kann die jeweilige ringförmige Aussparung 3 beispielsweise konusförmig ausgestaltet werden. Dies erlaubt einen in den Nuten 2 und der jeweilige ringförmige Aussparung 3 zu bildenden Kurzschlusskäfig derart auszuführen, dass der Rotor besonders vorteilhafte elektrische und/oder mechanische Eigenschaften aufweist.

Der Rotorkern 1 weist eine Diffusionsschicht 4 auf, welche im Rahmen des Ausführungsbeispiels die Außenfläche des Rotorkerns 1 im Bereich der jeweiligen ringförmigen Aussparung 3 bedeckt. Die Diffusionsschicht 4 umfasst dabei ein Diffusionsmaterial, wie zum Beispiel Nickel, auf und ist insbesondere zwischen 15 µm bis 40 µm dick.

Der Rotorkern 1 ist besonders geeignet zur Herstellung eines Asynchronmassivläufers, welcher in einer elektrischen Maschine mit einer Leistung von mehr als 1 MW bzw. einer Drehzahl von mehr als 4000 Umdrehungen/min betreibbar ist.

Figur 2 zeigt ein Ausführungsbeispiel eines erfindungsgemäßen Rotors. Der in der Figur 2 dargestellte Rotor kann insbesondere ausgehend von dem in der Figur 1 dargestellten Rotorkern 1 erhalten werden. Hierzu wird ein Granulat 5 eines elektrisch leitenden Materials in den Nuten 2 und die jeweilige ringförmige Aussparung 3 eingebracht, was in der Figur 2 jedoch zum Zwecke einer besseren Übersicht nur für eine Nut 4 und nur für einen Abschnitt einer ringförmige Aussparung 3 angedeutet ist. Das in den Nuten 2 und der jeweiligen ringförmigen Aussparung 3 angeordnete Granulat 5 wird dann unter Zuführung von Hitze und unter Ausübung von Druck materialschlüssig mit dem Rotorkern 1 verbunden. Dadurch bildet das elektrisch leitende Material, welches zunächst als Granulat 5 vorliegt, einen Kurzschlusskäfig, welcher Kurzschlussstäbe in den Nuten 2 und einen Kurzschlussring in der jeweiligen ringförmigen Aussparung 3 aufweist.

Zur materialschlüssigen Verbindung des Granulats 5 mit dem Rotorkern 1 kann am Rotorkern zunächst eine Umhausung angebracht werden, welche zumindest die Nuten 2 und die jeweilige ringförmige Aussparung 3 des Rotorkerns 1 gasdicht umschließen kann. Dabei wird das Granulat 5 zumindest in die Nuten 2 und die jeweilige ringförmige Aussparung 3 eingebracht und anschließend die Umhausung gasdicht um den Rotorkern 1 geschlossen und evakuiert. Die Umhausung kann beispielsweise ein Blechrohr sein, welches dem Rotor umschließt und konzentrisch zur Rotorachse angeordnet ist. Vorzugsweise wird in die Umhausung ein Überschuss des Granulats des elektrisch leitenden Materials eingebracht.

Beispielsweise kann das elektrisch leitende Material Kupfer aufweisen. Vorzugsweise wird das Granulat 5 dabei auf eine Temperatur von 1020° C bis 1050° C erhitzt und unter einem Druck von 980 bar 1020 bar gesetzt. Weiterhin kann das Granulat 5 dabei unter Vakuum gehalten werden und/oder ein Schutzgas bzw. Prozessgas, wie zum Beispiel Argon oder Stickstoff, zugeführt werden.

Zusammenfassend betrifft die Erfindung ein Verfahren zur Herstellung eines Rotors einer elektrischen Maschine, wobei der Rotor einen konzentrisch zur Rotorachse angeordneten Rotorkern aus einem Kernmaterial aufweist, wobei der Rotorkern Nuten aufweist, welche im Wesentlichen in axialer Richtung verlaufen, wobei der Rotorkern am jeweiligen axialen Ende der Nuten jeweils eine ringförmige, konzentrisch zur Rotorachse angeordnete Aussparung aufweist, welche die Nuten verbindet, wobei der Rotorkern eine Diffusionsschicht aufweist, welche ein Diffusionsmaterial umfasst und welche zumindest die jeweilige Oberfläche der Nuten und/oder der jeweiligen ringförmigen Aussparung zumindest teilweise bedeckt. Weiterhin betrifft die Erfindung einen solchen Rotor und eine elektrische Maschine mit einem solchen Rotor. Um das eingangs genannte Verfahren bzw. den eingangs genannten Rotor dahingehend zu verbessern, dass der Rotor kostengünstiger hergestellt werden kann und dabei verbesserte mechanische Eigenschaften aufweist, wird vorgeschlagen, dass in die Nuten und/oder die jeweilige ringförmige Aussparung ein Granulat eines elektrisch leitenden Materials eingebracht wird, welches unter Zuführung von Hitze und unter Ausübung von Druck materialschlüssig mit dem Rotorkern verbunden wird.

## Patentansprüche

1. Verfahren zur Herstellung eines Rotors einer elektrischen Maschine,
- wobei der Rotor einen konzentrisch zur Rotorachse angeordneten Rotorkern (1) aus einem Kernmaterial aufweist,
- wobei der Rotorkern (1) Nuten (2) aufweist, welche im Wesentlichen in axialer Richtung verlaufen,
- wobei der Rotorkern (1) am jeweiligen axialen Ende der Nuten (2) jeweils eine ringförmige, konzentrisch zur Rotorachse angeordnete Aussparung (3) aufweist, welche die Nuten (2) verbindet,
- wobei der Rotorkern (1) eine Diffusionsschicht (4) aufweist, welche ein Diffusionsmaterial umfasst und welche zumindest die jeweilige Oberfläche der Nuten (2) und/oder der jeweiligen ringförmigen Aussparung (3) zumindest teilweise bedeckt,
**dadurch gekennzeichnet, dass** in die Nuten (2) und/oder die jeweilige ringförmige Aussparung (3) ein Granulat (5) eines elektrisch leitenden Materials eingebracht wird, welches unter Zuführung von Hitze und unter Ausübung von Druck materialschlüssig mit dem Rotorkern (1) verbunden wird.

2. Verfahren nach Anspruch 1,
wobei das elektrisch leitende Material zumindest Kupfer umfasst,
wobei das Diffusionsmaterial zumindest Nickel umfasst.

3. Verfahren nach Anspruch 2,
wobei das Granulat (5) zur materialschlüssigen Verbindung mit dem Rotorkern (1) auf eine Temperatur von 1010 °C bis 1060 °C erhitzt wird und unter einen Druck von 950 bar bis 1050 bargesetzt wird.

4. Verfahren nach einem der vorhergehenden Ansprüche,
wobei das in den Nuten (2) und/oder der jeweiligen ringförmigen Aussparung (3) angeordnete Granulat (5) unter Vakuum gehalten wird, während Hitze zugeführt wird und Druck ausgeübt wird.

5. Verfahren nach einem der vorhergehenden Ansprüche,
wobei die Diffusionsschicht (4) eine Schichtdicke von 1 µm bis 100 µm aufweist.

6. Verfahren nach einem der vorhergehenden Ansprüche,
wobei die Nuten (2) im Rotorkern (1) geschlossen ausgeführt sind.

7. Rotor für eine elektrische Maschine mit
- wobei der Rotor einen konzentrisch zur Rotorachse angeordneten Rotorkern (1) aus einem Kernmaterial aufweist,
- wobei der Rotorkern (1) Nuten (2) aufweist, welche im Wesentlichen in axialer Richtung verlaufen,
- wobei der Rotorkern (1) am jeweiligen axialen Ende der Nuten (2) jeweils eine ringförmige, konzentrisch zur Rotorachse angeordnete Aussparung (3) aufweist, welche die Nuten (2) verbindet,
- wobei der Rotorkern (1) eine Diffusionsschicht (4) aufweist, welche ein Diffusionsmaterial umfasst und welche zumindest die jeweilige Oberfläche der Nuten (2) und/oder der jeweiligen ringförmigen Aussparung (3) zumindest teilweise bedeckt,
**dadurch gekennzeichnet, dass** in den Nuten (2) und/oder der jeweiligen ringförmigen Aussparung (3) ein elektrisch leitendes Material eingebracht ist, welches als Granulat (5) unter Zuführung von Hitze und unter Ausübung von Druck materialschlüssig mit dem Rotorkern (1) verbunden ist.

8. Rotor nach Anspruch 7,
wobei das elektrisch leitende Material zumindest Kupfer umfasst,
wobei das Diffusionsmaterial zumindest Nickel umfasst.

9. Rotor nach Anspruch 7 oder 8,
wobei die Nuten (2) im Rotorkern (1) geschlossen ausgeführt sind.

10. Rotor nach einem der Ansprüche 7-9,
wobei der Rotor als Asynchronmassivläufer ausgeführt ist.

11. Elektrische Maschine mit einem Rotor nach einem der Ansprüche 7-10.

12. Elektrische Maschine nach Anspruch 11,
wobei die elektrische Maschine mit einer Leistung von mehr als 1 MW und/oder einer Drehzahl von mehr als 4000 Umdrehungen pro Minute betreibbar ist.
